# EUROPÄISCHE PATENTANMELDUNG

(11) **EP 3 954 581 A1**
(43) Veröffentlichungstag der Anmeldung: **16.02.2022**
(21) Anmeldenummer: 21191212.6
(22) Anmeldetag: 13.08.2021
(51) Int. Cl.: B60Q 3/64

(54) **BELEUCHTUNGSEINRICHTUNG FÜR FAHRZEUGE**

(30) Priorität: 13.08.2020 DE 102020210322
(71) Anmelder: Marquardt GmbH, 78604 Rietheim-Weilheim (DE)
(72) Erfinder: Werni, Regina, 71149 Bondorf (DE); Amadio, Manuel, 78052 Villingen - Schwenningen (DE); Repp, Markus, 78549 Spaichingen (DE)
(74) Vertreter: Jostarndt Patentanwalts-AG

(57) **Zusammenfassung**

Die Erfindung betrifft eine Beleuchtungseinrichtung für Fahrzeuge aufweisend ein Gehäuse gebildet im Wesentlichen durch ein erstes Gehäuseelement und wenigstens ein zweites Gehäuseelement, wobei das Gehäuse wenigstens einen Aufnahmeraum für ein Lichterzeugungsmodul und wenigstens einen Lichtkanal zur Leitung des von dem Lichterzeugungsmodul emittierten Lichtes an einen Lichtleiter aufweist und wobei der Lichtleiter angrenzend einer Lichtaustrittsöffnung des Gehäuses vorgesehen gebildet ist. Weiterhin betrifft die Erfindung ein Fahrzeug mit einer solchen Beleuchtungseinrichtung.

## Beschreibung

Die Erfindung betrifft eine Beleuchtungseinrichtung für Fahrzeuge aufweisend ein Gehäuse gebildet im Wesentlichen durch ein erstes Gehäuseelement und wenigstens ein zweites Gehäuseelement, wobei das Gehäuse wenigstens einen Aufnahmeraum für ein Lichterzeugungsmodul und wenigstens einen Lichtkanal zur Leitung des von dem Lichterzeugungsmodul emittierten Lichtes an einen Lichtleiter umfasst. Weiterhin betrifft die Erfindung ein Fahrzeug mit einer solchen Beleuchtungseinrichtung.

Beleuchtungseinrichtungen für Innenräume, geschlossenen oder offenen Bereichen mit oder ohne Tageslichteinwirkung und mit unterschiedlichen Aufgaben, Anforderungen sind im Stand der Technik in großer Zahl verfügbar.

In diesem Zusammenhang sind eine Vielzahl von Aufgaben, Anforderungen möglich: Verbesserung der Lesbarkeit, Erkennbarkeit von Text, Schrift, Symbolen, Warnhinweisen und so weiter beispielsweise auf oder in Tafeln, Gegenständen, Armaturenbrettern von Fahrzeugen, Schaltern und Bedienelementen. Neben dem gezielten, punktuellen oder bereichsweisen Ausleuchten definierter Abschnitte können auch unterschiedliche Lichtwellenlängen und / oder Lichtwellenausrichtungen eingesetzt werden, dies in Abhängigkeit der zu realisierenden Anforderungen. Beispielsweise können Darstellung, Sichtbarkeit oder farbliche Abgrenzungen durch Polarisationsfilter, polarisiertem Licht oder durch Auswahl des Farbspektrums aus dem sichtbaren Licht zwischen ultravioletten und infraroten Wellenlängen verbessert oder beeinflusst werden.

Innerhalb von Fahrgastzellen, Fahrzeuginnenbereichen, Fahrzeugführerständen werden neben Beleuchtungseinrichtungen für die Verbesserung der Lesbarkeit, Erkennbarkeit auch Lichtemittenten eingesetzt, die indirektes Licht, Ambientelicht, Lichtmuster oder Lichteffekte wie beispielsweise Lichtkonturen, Lichtfiguren erzeugen. Für diese Beleuchtungseinrichtungen sind je nach Zweck, Einbausituation, Lage im Fahrzeugraum relativ zumindest zu dem Fahrzeugführer verschiedene Anforderungen zu erfüllen wie beispielsweise Blendungsfreiheit, Stoßfestigkeit, elektrische Sicherheit, IP-Schutz-Code, Temperaturschwankungsfestigkeit, Feuchteunempfindlichkeit, Kostengesichtspunkte, Bauraumminimierung etc.. Dazu wurden verschiedene Konzepte und Lösungen entwickelt und sind im Stand der Technik verfügbar.

Die DE 10 2010 030 660 A1 offenbart ein Innenausstattungsteil für ein Fahrzeug, umfassend ein Lichtemissionselement zum Emittieren von Licht und ein streifenförmiges Lichtleiterelement. Das Lichtleiterelement weist dabei eine erste Oberfläche und eine zweite Oberfläche auf, wobei die erste Oberfläche eine der beiden größten Oberflächen des Lichtleiterelements ist und die zweite Oberfläche eine von diesen abweichende Oberfläche ist und die erste Oberfläche eine Einkopplungsfläche umfasst. Ferner sind das Lichtleiterelement und das Lichtemissionselement so angeordnet und ausgestaltet, dass Licht von dem Lichtemissionselement über die Einkopplungsfläche in das Lichtleiterelement einkoppelbar und über die zweite Oberfläche auskoppelbar ist.

Die EP 2 639 108 A2 offenbart eine Beleuchtungseinrichtung, insbesondere kombinierte Kontur-und Ambientebeleuchtung für ein Kraftfahrzeug, wobei durch ein Gehäuse umfassend ein erstes und ein zweites Gehäuseteil, die zwischen sich in einem Aufnahmeraum einen Lichtleiter aufnehmen, und zwischen deren Ränder ein Streifen aus einer für von dem Lichtleiter emittiertes Licht transparenten Kunststofffolie randbündig angeordnet ist, wobei das emittierte Licht an einer Stirnseite des Streifens eingekoppelt und an der anderen Stirnseite ausgekoppelt wird, und dass ein drittes Gehäuseteil vorgesehen ist, das unter Ausbildung eines zum Rand hin offenen Spalts am zweiten Gehäuseteil angeordnet ist, wobei zwischen dem zweiten und dem dritten Gehäuseteil in einem Aufnahmeraum ein zweiter Lichtleiter aufgenommen ist, dessen emittiertes Licht durch den Spalttritt.

In der DE 10 2018 103 659 A1 wird eine Beleuchtungseinrichtung für ein Fahrzeug vorgestellt, welches ein erstes Gehäuseteil aus einem ersten Kunststoff und ein zweites Gehäuseteil aus einem zweiten Kunststoff aufweist, die zusammen einen Aufnahmeraum bilden, der mindestens eine Lichtauslassöffnung aufweist, mindestens ein in dem Aufnahmeraum untergebrachtes Lichterzeugungsmodul mit mindestens einer Lichtquelle und mindestens einen in dem Aufnahmeraum untergebrachter Lichtleiter, der zum Führen des von der mindestens einen Lichtquelleabstrahlbaren Lichts zu der mindestens einen Lichtauslassöffnung eingerichtet ist.

Eine Beleuchtungseinrichtung mit einer im Auskoppelbereich geometrisch gestalteten Ausnehmung zur Halterung zeigt die DE 10 2015 006 426 B4. Beschrieben ist eine Beleuchtungseinrichtung zum Erzeugen eines Lichtstreifens entlang einer vorgegebenen Kontur in einem Innenraum eines Kraftfahrzeugs, wobei die Beleuchtungseinrichtung entlang der Kontur ein Gehäuseelement, ein länglich geformtes Lichtleitelement zum Emittieren von Licht entlang der Kontur und einen Diffusor mit einem Einkoppelbereich zum Einkoppeln des von dem Lichtleitelement emittierten Lichtes und einem dem Innenraum des Kraftfahrzeugs zugewandten Auskoppelbereich zum Auskoppeln des emittierten Lichtes aufweist, und die Beleuchtungseinrichtung ein Halteelement aufweist, wobei das Gehäuseelement und das Halteelement zum Ausbilden eines Aufnahmeraumes für das Lichtleitelement und zum Halten des Diffusors mechanisch verbunden sind, und das Gehäuseelement einen Frontbereich aufweist, welcher zum Erzeugen des Lichtstreifens entlang der Kontur den Auskoppelbereich des Diffusors bereichsweise bedeckt, wobei der Auskoppelbereich des Diffusors eine erste Ausnehmung aufweist und der Frontbereich des Gehäuseelementes an einer dem Auskoppelbereich zugewandten Seite eine zu der ersten Ausnehmung korrespondierende erste Erhebung aufweist.

Auch elastische Lichtleiter sind im Stand der Technik verfügbar. Die DE 10 236 499 A1 beschreibt eine Leuchtenanordnung in einem Fahrzeug mit einem Lichtleiter, der das Licht einer Lichtquelle zu einem zu beleuchtenden Fahrzeugteil führt, aus biegsamem durchsichtigem Kunststoff, mit einer Dicke von mindestens 2 mm, vorzugsweise mindestens 3 mm, gebildet, wobei der zulässige kleinstmögliche elastische Biegeradius des Lichtleiters höchstens fünfmal so groß wie seine Dicke ist. Der flexible biegsame Lichtleiter ist ohne plastische Verformung beziehungsweise ohne Transmissionsänderung oder Materialschädigung elastisch verformbar, sodass die Fahrzeugbeleuchtungsanordnung daher am Beleuchtungsort praktisch keine Bautiefe benötigt.

Ein Innenausstattungsteil für ein Kraftfahrzeug wird in der DE 10 2015 122 257 A1 beschrieben, es umfasst zumindest einen strangförmigen Leuchtkörper, mehrere punktförmige Lichtquellen und zumindest eine Lichtleiterleiste, die zwischen dem Leuchtkörper und den Lichtquellen angeordnet ist. Die Lichtquellensind entlang einer Längserstreckungsrichtung des Leuchtkörpers angeordnet. Die Lichtquellen können hierbei, bevorzugt in regelmäßigen Abständen, voneinander beabstandet angeordnet sein. Des Weiteren sind die Lichtquellen voneinander unabhängig ansteuerbar. Die Lichtquellen sind daher bevorzugt als RGB-LED, LED oder OLED ausgeführt. Da die Lichtleiterleiste zwischen den Lichtquellen und dem Leuchtkörper angeordnet ist, wird ein von den Lichtquellen abgegebenes Licht in die Lichtleiterleiste eingekoppelt und von der Lichtleiterleiste Richtung strangförmigen Leuchtkörper geführt. Bevorzugt wird in diesem Zusammenhang das Licht der Lichtquellen in eine Schmalseite der Lichtleiterleiste eingekoppelt. Es ist daher von Vorteil, wenn auch die Lichtleiterleiste sich entlang der Längserstreckungsrichtung des Leuchtkörpers erstreckt. Des Weiteren ist zwischen Lichtleiterleiste und Leuchtkörper zumindest ein Lichtverteilungselement angeordnet. Das Lichtverteilungselement kann in diesem Zusammenhang sowohl dem Leuchtkörper zugewandt an der Lichtleiterleiste als auch der Lichtleiterleiste zugewandt am Leuchtkörper angeordnet sein.

Einen sehr stringenten Aufbau einer Beleuchtungseinrichtung zeigt die DE 10 2012 005 399 A1. Die vorgestellte Beleuchtungseinrichtung weist ein zweiteiliges Gehäuse auf, das länglich ist und eine Form hat, die der abzubildenden Kontur respektive der Kontur, die von der erzeugten Lichtlinie umrahmt werden soll, entspricht. Das Gehäuse weist einen Aufnahmeraum auf, in dem ein Lichtleiter angeordnet wird, in welchen an einem Ende Licht eingekoppelt wird, das in an sich bekannter Weise seitlich emittiert wird. Dem Lichtleiter parallelgeordnet ist eine Kunststofffolie, die zwischen den Rändern der Gehäuseteile aufgenommen ist und dort bevorzugt randbündig abschließt. Die Kunststofffolie ist für das vom Lichtleiter emittierte Licht transparent. Da die Kunststofffolie parallel zum Lichtleiter verläuft, wird folglich vom Lichtleiter emittiertes Licht in die eine schmale Stirnseite des Kunststofffolienstreifens eingekoppelt. Das Licht tritt an der anderen schmalen Stirnseite des Folienstreifens wieder aus. Diese Stirnseite ist wie beschrieben randbündig zwischen den sehr schmalen Gehäuserändern aufgenommen. Diese schmale Stirnseite bildet folglich die einzige Lichtaustrittsfläche, die den Lichtstreifen definiert. Die Dicke der Kunststofffolie kann deutlich geringer gewählt werden als der Lichtleiterdurchmesser, so dass sich folglich ein wesentlich schmalerer Lichtstreifen erzeugen lässt. Mithin kann folglich eine sehr feine Konturbeleuchtung realisiert werden, die einerseits auch kleinere Strukturen optisch ansprechend hervorhebt, andererseits aber auch ohne weiteres integriert werden kann, auch wenn wenig Bauraum zur Verfügung steht. Die Dicke des Folienstreifens sollte bevorzugt kleiner 1 mm, insbesondere zwischen 0,3-0,5 mm liegen. Es ist durch Verwendung einer entsprechend dünnen Folie folglich möglich, Lichtstreifen zu erzeugen, die eine sehr geringe Breite von deutlich unter 1 mm besitzen, verglichen mit bisher bekannten Konturbeleuchtungen, bei denen die Lichtstreifenbreite 2 mm oder mehr beträgt.

Die WO 2018/149741 A1 stellt eine Beleuchtungsvorrichtung für ein Innenausstattungsteil eines Kraftfahrzeuges vor, die mit möglichst wenig Bauraum auskommen soll und gleichzeitig einfach zu montieren ist. Die Beleuchtungsvorrichtung umfasst eine Lichtleiterleiste, eine Lichtquellenleiste und ein Abdeckelement. Die Lichtleiterleiste besteht bevorzugt aus einem zumindest teilweise transparenten Material und besitzt eine sich entlang einer Längserstreckungsrichtung erstreckende Lichteintrittsfläche. Unter einer Längserstreckungsrichtung kann in diesem Zusammenhang eine Richtung verstanden werden, die sich parallel zur längsten Seite der Lichtleiterleiste erstreckt. Unter Lichteintrittsfläche kann des Weiteren eine Fläche oder Oberfläche der Lichtleiterleiste verstanden werden, über die Licht in die Lichtleiterleiste hinein einkoppelbar ist, wobei die Lichteintrittsfläche bevorzugt durch zumindest eine der längsten Flächen der Lichtleiterleiste ausgebildet wird. Die Lichtleiterleiste kann eine oder mehrere solcher Lichteintrittsflächen aufweisen. Die Lichtleiterleiste besteht bevorzugt aus einem transparenten Kunststoff, wie z.B. Polycarbonat oder Polymethylmethacrylat. Die Lichtquellenleiste umfasst eine Vielzahl von punktförmigen Lichtquellen, die in Reihe, insbesondere entlang einer Parallelen zu der Längserstreckungsrichtung, angeordnet sind. Es ist an dieser Stelle bevorzugt, dass die Abstände, in denen die punktförmigen Lichtquellen zueinander angeordnet sind, konstant sind. Die Lichtquellenleiste ist derart an der Lichtleiterleiste angeordnet, dass die in Reihe angeordneten punktförmigen Lichtquellen entlang der Lichteintrittsfläche angeordnet sind. Die Lichtquellen sind dabei bevorzugt derart zur Lichteintrittsfläche ausgerichtet, dass von den Lichtquellen abgegebenes Licht direkt in Richtung Lichteintrittsfläche strahlt und somit das Licht der punktförmigen Lichtquellen in die Lichtleiterleiste einkoppelbar ist. Die Lichtquellenleiste kann beispielsweise aus einer Halbleiterplatte bestehen, auf der die Lichtquellen aufgebracht sind. Die Lichtquellen können beispielsweise durch Leuchtdioden und insbesondere durch mehrfarbige Leuchtdioden (RGB-LED) ausgebildet sein. Es ist ebenso möglich, dass die Lichtquellenleiste aus mehreren Halbleiterplatinen aufgebaut ist, die zum Beispiel über zumindest ein Kontaktband miteinander verbunden sind.

Aus der DE 10 2008 050 434 A1 ist eine Kraftfahrzeugschloßanordnung mit einer Leuchtenanordnung, insbesondere einer Anzeigeanordnung zur optischen Anzeige des aktuellen Schlosszustandes, bekannt. Dabei kann ein Lichtleiter der Leuchtenanordnung an ein Gehäuse der Leuchtenanordnung angespritzt sein.

Die DE 10 2016 200 580 A1 beschreibt eine modulare Beleuchtungsvorrichtung für den Innenraum eines Fahrzeuges, mit der wenigstens eine Lichtfunktion erzeugt werden kann, bekannt. Auch in dieser Vorrichtung kann ein Lichtleiter der Beleuchtungsvorrichtung an ein Gehäuse der Beleuchtungsvorrichtung angespritzt sein.

Der zuvor beschriebene und weitere verfügbare Stand der Technik kann je nach Einsatzbedingungen der Beleuchtungsvorrichtungen, der Montageanforderungen oder hinsichtlich der Wirtschaftlichkeit nicht immer überzeugen. Je nach Anforderung an die Beleuchtungsaufgabe ist die Homogenität des erzeugten Lichtes nicht ausreichend, die Montage gestaltet sich aufwändig oder spezielle, beispielsweise diffuse Lichteffekte können nicht oder nicht ausreichend generiert werden. Letztlich spielen bei Innenraumbeleuchtungen von Fahrzeugen zunehmend auch Energieeffizienzüberlegungen insbesondere im Bereich der Elektromobilität eine zunehmende Rolle.

Es ist Aufgabe der Erfindung eine Beleuchtungseinrichtung für Fahrzeuge weiterzuentwickeln, sodass die zuvor genannten Nachteile des Standes der Technik wenigstens teilweise reduziert und die Funktionalität und / oder der Aufbau in vereinfachender Weise verbessert wird.

Die erfindungsgemäße Lehre sieht eine Beleuchtungseinrichtung für ein Fahrzeug vor, aufweisend ein wenigstens zweiteiliges Gehäuse mit einem im Innern aufgenommen Lichterzeugungsmodul. Das Gehäuse verfügt über einen Lichtkanal, eine Lichtauslassöffnung und einen angrenzend oder Innerhalb der Lichtaustrittsöffnung angeordneten Lichtleiter, die so eingerichtet sind, dass das von dem Lichterzeugungsmodul emittiertes Licht über den Lichtkanal an den Lichtleiter geleitet wird, dort austritt und je nach Anforderung homogen verteilt oder punktuell gerichtet wird.

Der angrenzend oder innerhalb der Lichtauslassöffnung des zweiteiligen Gehäuses angeordnete Lichtleiter kann diffuse Eigenschaften aufweisen, sodass eine vergleichmäßigte, kontrast- und schattenreduzierte Flächenausleuchtung erreicht wird. Denkbar sind auch Lichtleiter mit gerichteten Lichtleiteigenschaften zur fokussierten Beleuchtung einzelner Elemente. Der Lichtleiter kann ein- oder mehrteilig aufgebaut sein und durch Form- oder Stoffschluss am oder im Gehäuse festgelegt werden. Vorzugsweise kann ein Stoffschluss realisiert werden durch Verwendung der Zweikomponenten-Kunststoffspritztechnik, das heißt die Lichtleiterkomponente wird an eines der Gehäuseteile angespritzt und bildet mit diesem ein Zweikomponenten-Spritzgussteil.

Durch die Ausgestaltung der Gehäuseteilung sowohl in Längs- als auch in Querrichtung kann die Erfindung sowohl den Lichtleiter in der Lichtaustrittsöffnung aufnehmen als auch die unerwünschte Lichtverschmutzung durch Lichtaustritt aus dem Gehäuse an beispielsweise Gehäuseteilungsspalten zuverlässig unterbinden. Dies wird konstruktiv insbesondere dadurch erreicht, dass die quergerichtete Gehäuseteilung durch einen sehr langen, nahezu über die gesamte Gehäusebreite ausgeführten Teilungsspalt weitgehend lichtdicht ist. Eine weitere erfindungsgemäße Möglichkeit zur Optimierung hinsichtlich lichtdichter Gehäuseteilung besteht darin, den langen Teilungsspalt durch einen winkeligen Teilungsverlauf labyrinthartig zu ergänzen.

In einer möglichen Ausgestaltung der erfindungsgemäßen Beleuchtungseinrichtung ist vorgesehen, das vorzugsweise zweiteilige Gehäuse querschnittsbezogen mit einem innenseitiges Längen-Breiten-Verhältnis vorzugsweise zwischen 5:1 und 2:1, insbesondere von ca. Faktor 3 auszubilden und das Lichterzeugungsmodul mit dem Lichtleiter diametral innenendseitig der Längserstreckung anzuordnen. Die Erfindung erkennt, dass dadurch die Führung des Lichts innerhalb des Gehäuses und im Zusammenwirken mit dem Lichtleiter auch das Licht-Emittierungsverhalten nach auswärts des Gehäuses in vielfacher Weise beeinflussbar ist.

Eine Möglichkeit besteht darin, einen Lichtkanal innerhalb des Gehäuses auszubilden, der das von der Lichtquelle emittierte Licht bereits vor dem Auftreffen beziehungsweise vor der Durchleitung durch den Lichtleiter hinaus aus dem Gehäuseinneren leitet, richtet, beeinflusst. Die Erfindung erkennt, dass bereits mit der Lichtleitungsbeeinflussung innerhalb des Gehäuses und insbesondere innerhalb des Lichtkanals erheblich auf die Art der Lichtemittierung nach außerhalb durch den Lichtleiter eingewirkt werden kann. Erfindungsgemäß kann das Gehäuse mit seinen vorzugsweise zwei Gehäuseteilen zumindest im Bereich zwischen Lichterzeugungsmodul, Lichtquelle und dem Lichtleiter durch reflektierendes Material, beispielsweise reflektierendem weißen Kunststoffmaterial gebildet sein. Auf diese Weise können Lichtbündelungseffekte vor oder in dem Lichtleiter erzeugt werden.

Eine weitere erfindungsgemäße Ausgestaltung sieht vor, dass das Gehäuse mit seinen vorzugsweise zwei Gehäuseteilen zumindest im Bereich zwischen Lichterzeugungsmodul, Lichtquelle und dem Lichtleiter eine wenigstens bereichsweise reflektierende Beschichtung, beispielsweise eine reflektierende Lackierung, reflektierende Verchromung oder eine PVD-Bedampfung (PVD=physical vapour deposition) aufweist.

Ebenfalls kann zur Beeinflussung der Lichtdurchleitung und insbesondere zur Reduzierung der Lichtdurchmischung, Lichtüberlagerung mehrerer Lichtquellen in dem Gehäuse wenigstens eine Zwischenwand in dem Bereich zwischen Lichterzeugungsmodulen, Lichtquellen und dem Lichtleiter vorgesehen werden. Diese wenigstens eine Zwischenwand ist vorzugsweise nicht oder nur wenig lichtdurchlässig und kann optional mit den zuvor beschriebenen Reflektierungsmaßnahmen versehen oder aus weißem Kunststoff gebildet sein.

Die Erfindung wird im Folgenden anhand exemplarischer Ausführungsbeispiele in Verbindung mit den Figuren näher erläutert. Dabei zeigen:
- Fig. 1: eine vereinfachte, abstrahierte Schnitt-Seitenansicht der Beleuchtungseinrichtung für Fahrzeuge in einer ersten möglichen Ausgestaltung mit einem wenigstens aus zwei Teilen bestehendem Gehäuse und
- Fig. 2: eine vereinfachte, abstrahierte Schnitt-Seitenansicht der Beleuchtungseinrichtung für Fahrzeuge in einer zweiten möglichen Ausgestaltung sowie
- Fig. 3: die vereinfachte, abstrahierte Schnitt-Seitenansicht der Beleuchtungseinrichtung für Fahrzeuge in einer dritten möglichen Ausgestaltung.

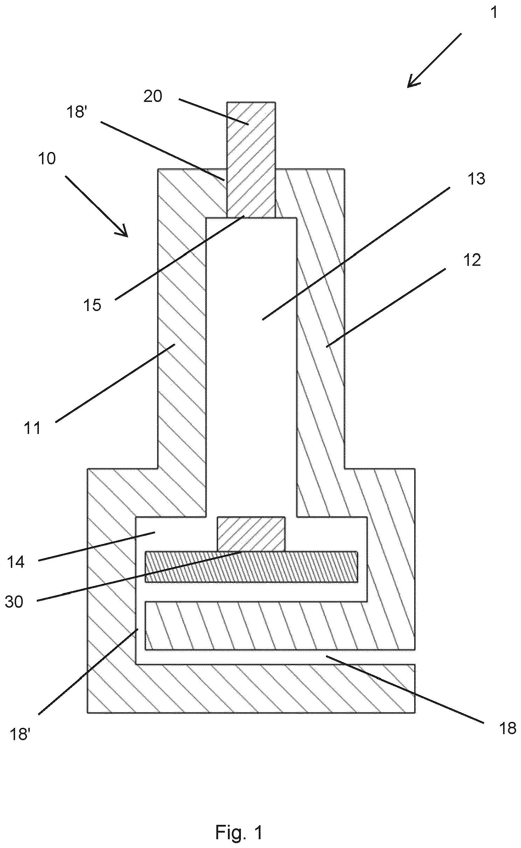

Figur 1 umfasst eine vereinfachte, abstrahierte Schnitt-Seitenansicht der Beleuchtungseinrichtung für Fahrzeuge 1 in einer ersten möglichen Ausgestaltung mit einem Gehäuse 10 aufweisend wenigstens ein erstes Gehäuseteil 11 und wenigstens ein zweites Gehäuseteil 12.

Innerhalb des aus wenigstens zwei Teilen bestehenden Gehäuses 10 ist ein Aufnahmeraum 14 gebildet, in dem ein Lichterzeugungsmodul, Lichtquelle 30 angeordnet ist. Die Lichtquelle 30 kann neben der eigentlichen lichtemittierenden Komponente auch Leistungs- und / oder Steuerungselektronkien sowie weitere elektrische oder elektronische Bauelemente enthalten.

Das Gehäuse verfügt über eine Lichtauslassöffnung 15, welche mit einem Lichtleiter 20 derart zusammenwirkt, sodass das von dem Lichterzeugungsmodul 30 emittierte Licht über die Lichtauslassöffnung 15 austritt und anforderungsabhängig homogen verteilt oder punktuell gerichtet wird. Der Lichtleiter 20 ist beispielhaft als Einkomponentenlichtleiter gewählt, möglich und je nach gewünschtem Lichteffekt können auch Zwei- oder Mehrkomponentenlichtleiter Verwendung finden. Weiterhin kann der Lichtleiter 20 als separates Bauteil in die Lichtauslassöffnung 15 des Gehäuses 10 eingesetzt sein oder der Lichtleiter 20 wird durch Verwendung der Zweikomponenten-Kunststoffspritztechnik an eines der Gehäuseteile 11, 12 angespritzt und bildet mit diesem ein Zweikomponenten-Spritzgussteil in einer stoffschlüssigen Verbindung.

Die Teilung der Gehäuseelemente 11, 12 zueinander ist sowohl längs- als auch querverlaufend. Insbesondere im Bereich des Aufnahmeraums 14 des Gehäuses 10 für das Lichterzeugungsmodul 30 kann eine quergerichtete Gehäuseteilung 18 vorgesehen sein. Die sich daraus ergebende Länge des Teilungsspaltes zum einen und der sich optional ergebende winkelige Teilungsverlauf zum anderen resultiert in einer weitgehenden Lichtdichtheit, sodass die unerwünschte Lichtverschmutzung durch Lichtaustritt aus dem Gehäuse 10 an beispielsweise Gehäuseteilungsspalten 18, 18' (in der abstrahierten Darstellung übertrieben groß dargestellt) reduziert ist.

Der als Lichtkanal 13 ausgebildete Mittenbereich des Gehäuses 10 ist vorzugsweise länglich ausgeführt. Das innenseitige Längen-Breitenverhältnis ist sinnvoll zwischen 5:1 und 2:1, vorzugsweise etwa 3:1. Im Bereich des Lichtkanals 13 ist zumindest keine Längsteilung des Gehäuses 10 vorgesehen sodass der unerwünschte Lichtaustritt aus dem Gehäuse 10 an Gehäuseteilungsspalten nicht auftreten kann.

Im Gehäusebereich zwischen Lichterzeugungsmodul, Lichtquelle 30 und dem Lichtleiter 20, das heißt die den Lichtkanal 13 umgebenden Gehäusewandungen sind vorzugsweise durch reflektierendes Material, beispielsweise reflektierendem weißen Kunststoffmaterial gebildet, sodass Streulicht im Lichtkanal 13 von den Wandungen reflektiert und so beispielsweise Lichtbündelungseffekte vor oder in dem Lichtleiter 20 erzeugt werden.

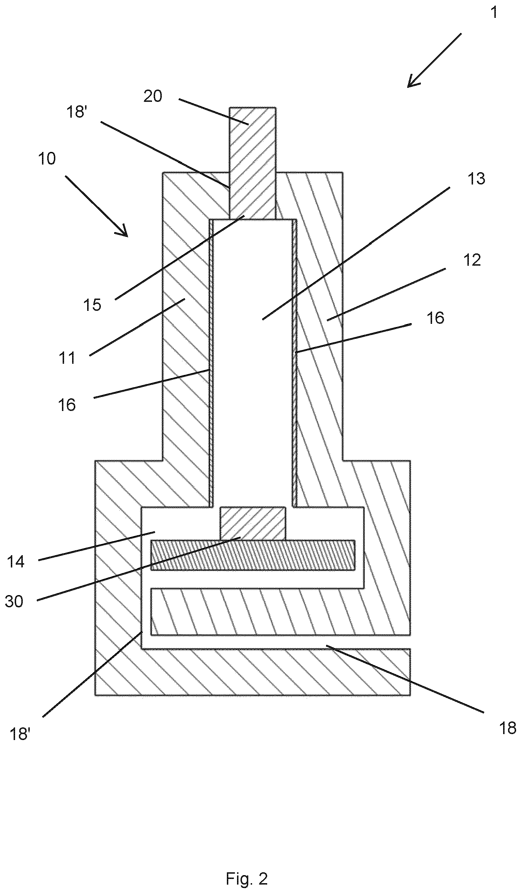

Figur 2 illustriert eine vereinfachte, abstrahierte Schnitt-Seitenansicht der Beleuchtungseinrichtung für Fahrzeuge 1 in einer zweiten möglichen Ausgestaltung mit einer gegenüber Figur 1 modifizierten Realisierung des Gehäuses 10 im Bereich des Lichtkanals 13. Zur gezielten Einwirkung auf die Lichtstärke, das Beleuchtungsverhalten, Lichteffekte und / oder dem Farbspektrum am Ausgang des Lichtleiters 20 hinein in den Fahrzeuginnenraum können gehäuseinnenseitig zumindest im Bereich zwischen Lichterzeugungsmodul, Lichtquelle 30 und dem Lichtleiter 20 wenigstens abschnittsweise eine oder mehrere reflektierenden Beschichtungen 16 vorgesehen werden. Geeignete Beschichtungen 16 können alle Materialien sein welche Reflexionseigenschaften aufweisen wie beispielsweise reflektierende Lackierungen, reflektierende Verchromungen oder PVD-Bedampfung (PVD=physical vapour deposition).

Auch die partielle Ausprägung der Beschichtung 16 nutzt die Erfindung zur Beeinflussung des Lichtemittierungsverhaltens ausgangsseitig des Lichtleiters 20 dadurch, dass die Beschichtung 16 in Bereichen oder vollflächig innenseitig des Gehäusebereiches am Lichtkanal 13 aufgebracht ist. Beispielsweise kann die Beschichtung in Reflexions-Hotspots in besonderer Weise die Lichtausbringung abhängig von der Lichtquelle 30 effizienter machen.

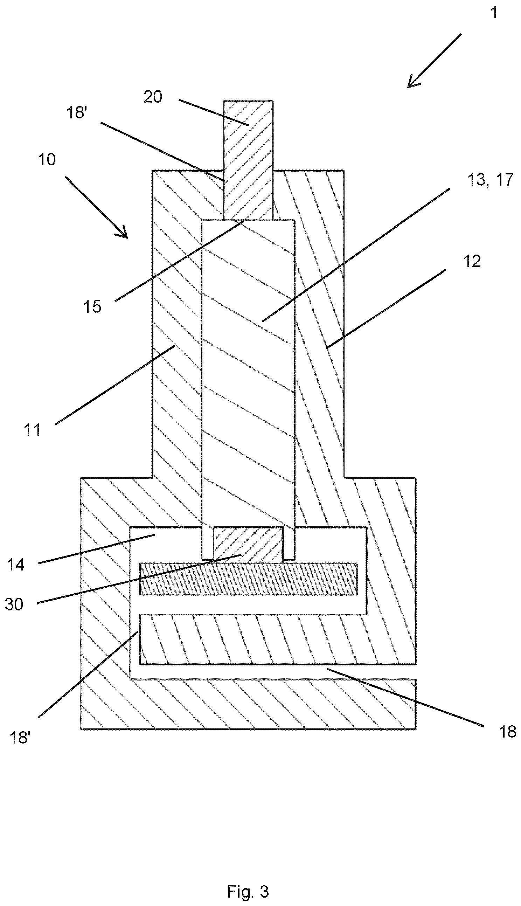

Figur 3 bildet die vereinfachte, abstrahierte Schnitt-Seitenansicht der Beleuchtungseinrichtung für Fahrzeuge 1 mit einer weiteren optionalen Modifikation zur Beeinflussung der Lichtdurchleitung und insbesondere zur Reduzierung der Lichtdurchmischung, Lichtüberlagerung mehrerer Lichtquellen 30 in dem Gehäuse 10 ab. In diesem Ausführungsbeispiel ist wenigstens eine Zwischenwand 17 in dem Bereich zwischen Lichterzeugungsmodulen, Lichtquellen 30 und dem Lichtleiter 20 innerhalb des Lichtkanals 13 vorgesehen. Diese wenigstens eine Zwischenwand 17 ist vorzugsweise nicht oder nur geringfügig lichtdurchlässig und kann optional mit den zuvor beschriebenen Reflektierungsmaßnahmen versehen oder aus weißem Kunststoff gebildet sein.

### Bezugszeichen:

- 1: Beleuchtungseinrichtung

- 10: Gehäuse, Einhausung
- 11: erstes Gehäuseteil, Gehäuseelement
- 12: zweites Gehäuseteil, Gehäuseelement
- 13: Lichtkanal
- 14: Aufnahmeraum
- 15: Lichtauslassöffnung, Lichtaustrittsöffnung
- 16: Beschichtung
- 17: Zwischenwandung, Zwischenwand
- 18: Gehäuseteilung quergerichtet
- 18': Gehäuseteilung längsgerichtet

- 20: Lichtleiter

- 30: Lichterzeugungsmodul, Lichtquelle

## Patentansprüche

1. Beleuchtungseinrichtung für Fahrzeuge (1) mit einem Gehäuse (10) gebildet im Wesentlichen durch ein erstes Gehäuseelement (11) und wenigstens ein zweites Gehäuseelement (12), wobei das Gehäuse (10) wenigstens einen Aufnahmeraum (14) für ein Lichterzeugungsmodul (30) und eine Lichtaustrittsöffnung (15) aufweist und ein Lichtleiter (20) angrenzend an die oder innerhalb der Lichtaustrittsöffnung (15) des Gehäuses (10) vorgesehen ist,
**dadurch gekennzeichnet,**
**dass** im Gehäuse wenigstens ein Lichtkanal (13) zur Leitung des von dem Lichterzeugungsmodul (30) emittierten Lichtes an einen Lichtleiter (20) ausgebildet ist und dass das Gehäuse (10) im Bereich des wenigstens einen Lichtkanals (13) zumindest partiell lichtreflektierende Eigenschaften aufweist.

2. Beleuchtungseinrichtung für Fahrzeuge (1) nach Anspruch 1,
**dadurch gekennzeichnet,**
**dass** der wenigstens eine Lichtkanal (13) im Querschnitt ein innenseitiges Längen-Breitenverhältnis zwischen 5:1 und 2:1, vorzugsweise etwa 3:1 aufweist.

3. Beleuchtungseinrichtung für Fahrzeuge (1) nach einem der vorangegangenen Ansprüche,
**dadurch gekennzeichnet,**
**dass** das erste Gehäuseelement (11) aus einem ersten Kunststoffmaterial und das zweite Gehäuseelement (12) aus einem zweiten Kunststoffmarerial besteht.

4. Beleuchtungseinrichtung für Fahrzeuge (1) nach einem der Ansprüche 1 bis 3,
**dadurch gekennzeichnet,**
**dass** die lichtreflektierenden Eigenschaften wenigstens abschnittsweise durch weißes Kunststoffmaterial erzeugt sind.

5. Beleuchtungseinrichtung für Fahrzeuge (1) nach einem der Ansprüche 1 bis 3,
**dadurch gekennzeichnet,**
**dass** die lichtreflektierenden Eigenschaften wenigstens abschnittsweise durch eine Beschichtung (16) in Form einer reflektierenden Lackierung, reflektierenden Verchromung oder einer PVD-Bedampfung erzeugt sind.

6. Beleuchtungseinrichtung für Fahrzeuge (1) nach einem der vorangegangenen Ansprüche,
**dadurch gekennzeichnet,**
**dass** im Bereich des wenigstens einen Lichtkanals (13) wenigstens eine sich in Lichtkanallängsrichtung erstreckende Zwischenwand (17) angeordnet ist.

7. Beleuchtungseinrichtung für Fahrzeuge (1) nach Anspruch 6,
**dadurch gekennzeichnet,**
**dass** die wenigstens eine Zwischenwand (17) weitgehend lichtundurchlässig ist.

8. Beleuchtungseinrichtung für Fahrzeuge (1) nach Anspruch 6 oder Anspruch 7,
**dadurch gekennzeichnet,**
**dass** die wenigstens eine Zwischenwand (17) wenigstens bereichsweise lichtreflektierend ist.

9. Beleuchtungseinrichtung für Fahrzeuge (1) nach einem der vorangegangenen Ansprüche,
**dadurch gekennzeichnet,**
**dass** die Teilungseben der Gehäuseelemente (11, 12) sowohl längsals auch querverlaufend ist.

10. Beleuchtungseinrichtung für Fahrzeuge (1) nach Anspruch 9,
**dadurch gekennzeichnet,**
**dass** eine längsgerichtete Gehäuseteilung (18') im Bereich des Lichtkanals (13) angeordnet ist.

11. Beleuchtungseinrichtung für Fahrzeuge (1) nach Anspruch 9 oder nach Anspruch 10,
**dadurch gekennzeichnet,**
**dass** eine quergerichtete Gehäuseteilung (18) im Bereich des Aufnahmeraums (18) angeordnet ist.

12. Beleuchtungseinrichtung für Fahrzeuge (1) nach einem der vorangegangenen Ansprüche,
**dadurch gekennzeichnet,**
**dass** der Lichtleiter (20) das von dem innerhalb des Gehäuses (10) angeordneten Lichterzeugungsmodul (30) erzeugte Licht nach auswärts der Lichtauslassöffnung (15) homogen verteilt.

13. Beleuchtungseinrichtung für Fahrzeuge (1) nach einem der vorangegangenen Ansprüche,
**dadurch gekennzeichnet,**
**dass** der Lichtleiter (20) mit einer der Gehäuseelemente (11, 12) stoffschlüssig verbunden ist.

14. Fahrzeug aufweisend einen Innenraum mit einer Beleuchtungseinrichtung (1) nach einem der vorgehenden Ansprüche.
